# EUROPEAN PATENT APPLICATION

(11) **EP 4 395 385 A1**
(43) Date of publication of application: **03.07.2024**
(21) Application number: 22861310.5
(22) Date of filing: 22.08.2022
(51) Int. Cl.: H04W 8/08, H04W 24/02, H04W 60/04, H04W 92/10

(54) **DEVICE AND METHOD**

(30) Priority: 27.08.2021 JP 2021138943
(71) Applicant: DENSO CORPORATION, Kariya-city, Aichi 448-8661 (JP); TOYOTA JIDOSHA KABUSHIKI KAISHA, Toyota-shi Aichi 471-8571 (JP)
(72) Inventor: YAMAMOTO, Tomoyuki, Kariya-city, Aichi 448-8661 (JP); TAKAHASHI, Hideaki, Kariya-city, Aichi 448-8661 (JP)
(74) Representative: TBK
(86) International application number: PCT/JP2022/031560
(87) International publication number: WO 2023/027022

(57) **Abstract**

An apparatus (200) according to an aspect of the present disclosure includes: an information obtaining unit (231) configured to obtain path related information associated with a moving path of the apparatus; and a communication processing unit (235) configured to transmit a radio resource control, RRC, message including the path related information to a base station (100). The RRC message including the path related information is an RRC message initiated by the apparatus.

## Description

### CROSS-REFERENCE TO RELATED APPLICATIONS

This application is based on Japanese Patent Application No. 2021-138943, filed on August 27, 2021, the content of which is incorporated herein.

### Technical Field

The present disclosure relates to an apparatus and a method.

### Background Art

In 3rd Generation Partnership Project (3GPP) (registered trademark) Release 15, as a work item for long term evolution (LTE), some features for unmanned aerial vehicles (UAVs) as user equipments (UEs) have been discussed and specified (NPL 1).

One of the specified features is a Flight Path feature. With the Flight Path feature, a flight path of a UAV is reported from the UAV to a network in response to a request from the network. It is assumed that this will serve for control such as a handover or beamforming based on a moving plan of the UAV on the network side (NPL 2).

Although the Flight Path feature has not yet been defined for new radio (NR), the utilization of the Flight Path feature has been mentioned in proposals of work items for Release 18 (NPLs 3 to 5).

### Citation List

### Non Patent Literature

NPL 1: 3GPP TS 36.331 V15.14.0 (2021-06), "3rd Generation Partnership Project; Technical Specification Group Radio Access Network; Evolved Universal Terrestrial Radio Access (E-UTRA); Radio Resource Control (RRC); protocol specification (Release 15)"
NPL 2: 3GPP TSG-RAN WG2 Meeting #101bis Sanya, China, 16 - 20 Apr 2018, R2-1805125, Huawei, HiSilicon, CMCC, Fraunhofer, Nokia, Nokia Shanghai Bell, Lenovo, Motorola Mobility, InterDigital, KDDI, "Discussion on flight path information"
NPL 3: 3GPP TSG RAN - RAN-Rel-18 workshop, Online, 2021-06-28 - 2021-07-02, RWS-210190, Ericsson, "Motivation for Rel-18 UAV"
NPL 4: 3GPP TSG RAN Rel-18 workshop, Electronic Meeting, June 28 - July 2, 2021, RWS-210254, Lenovo, Motorola Mobility, "Discussion on UAV Swarm Support in NR RAN for Rel-18"
NPL 5: 3GPP TSG RAN Rel-18 workshop, Electronic Meeting, June 28- July 2, 2021, RWS-210474, ZTE, Sanechips, "Support of UAV for 5G Advanced"

### Summary of the Invention

A detailed study by the inventors has revealed the following issue. That is, the mechanism in Release 15 described in each of NPLs 1 and 2 may have an increased time lag from the time when a moving path can be reported by a UE to the time when communication control based on the moving path enables. For example, even if a moving path is set in the UE, it is not possible for the existing mechanism to report the moving path to a network before a specific RRC message is received from the network. This may increase a time lag before it is possible to perform communication control based on the moving path.

An object of the present disclosure is to provide an apparatus and a method that each make it possible to reduce a time lag from the time when a moving path can be reported by a UE to the time when communication control based on the moving path enables.

An apparatus (200) according to an aspect of the present disclosure includes: an information obtaining unit (231) configured to obtain path related information associated with a moving path of the apparatus; and a communication processing unit (235) configured to transmit a radio resource control, RRC, message including the path related information to a base station (100). The RRC message including the path related information is an RRC message initiated by the apparatus.

An apparatus (100) according to an aspect of the present disclosure includes: a communication processing unit configured to receive a radio resource control, RRC, message including path related information associated with a moving path of a user equipment (200) from the user equipment; and an information obtaining unit configured to obtain the path related information included in the RRC message including the path related information. The RRC message including the path related information is an RRC message initiated by the user equipment.

A method performed by an apparatus (200) according to an aspect of the present disclosure includes: obtaining path related information associated with a moving path of the apparatus; and transmitting a radio resource control, RRC, message including the path related information to a base station (100). The RRC message including the path related information is an RRC message initiated by the apparatus.

A method performed by an apparatus (100) according to an aspect of the present disclosure includes: receiving a radio resource control (RRC) message including path related information associated with a moving path of a user equipment (200) from the user equipment; and obtaining the path related information included in the RRC message including the path related information. The RRC message including the path related information is an RRC message initiated by the user equipment.

According to the present disclosure, it is possible to reduce a time lag from the time when a moving path can be reported by a UE to the time when communication control based on the moving path enables. Note that, instead of or in addition to this advantageous effect, the present disclosure may yield another advantageous effect.

### Brief Description of Drawings

FIG. 1 is an explanatory diagram illustrating an example of a schematic configuration of a system according to embodiments of the present disclosure.
FIG. 2 is an explanatory diagram for explaining an example of communication control based on a moving path of a user equipment according to embodiments of the present disclosure.
FIG. 3 is a block diagram illustrating an example of a schematic functional configuration of a base station according to embodiments of the present disclosure.
FIG. 4 is a block diagram illustrating an example of a schematic hardware configuration of the base station according to embodiments of the present disclosure.
FIG. 5 is a block diagram illustrating an example of a schematic functional configuration of the user equipment according to embodiments of the present disclosure.
FIG. 6 is a block diagram illustrating an example of a schematic hardware configuration of the user equipment according to embodiments of the present disclosure.
FIG. 7 is a sequence diagram for explaining an example of a schematic flow of processing according to embodiments of the present disclosure.
FIG. 8 is a sequence diagram for explaining an example of a schematic flow of processing according to a first modification example of embodiments of the present disclosure.
FIG. 9 is a sequence diagram for explaining an example of a schematic flow of processing according to a second modification example of embodiments of the present disclosure. Description of Embodiments

Hereinafter, embodiments of the present disclosure will be described in detail with reference to the appended drawings. In the present specification and the drawings, elements to which similar descriptions are applicable are denoted with the same reference signs, thereby omitting duplicate descriptions.

Descriptions will be given in the following order:
1. Configuration of System
2. Configuration of Base Station
3. Configuration of User Equipment
4. Operation Examples
5. Modification Examples

### <1. Configuration of System>

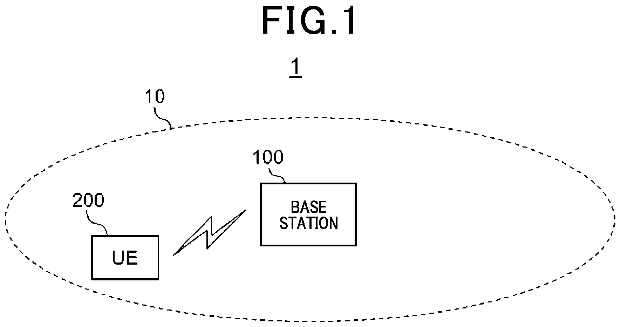

An example of a configuration of a system 1 according to embodiments of the present disclosure will be described with reference to FIG. 1. Referring to FIG. 1, the system 1 includes a base station 100 and a user equipment (UE) 200.

For example, the system 1 is a system compliant with technical specifications (TSs) in 3GPP. More specifically, for example, the system 1 is a system compliant with the TSs of 5G or new radio (NR). Naturally, the system 1 is not limited to this example. For example, the system 1 may be a system compliant with the TSs of LTE, LTE advanced (LTE-A), or 4G.

### (1) Base Station 100

The base station 100 is a node in a radio access network (RAN) and communicates with a UE (for example, UE 200) located within a coverage area 10 of the base station 100.

For example, the base station 100 communicates with a UE (for example, UE 200) by using a RAN protocol stack. For example, the protocol stack includes protocols of radio resource control (RRC), service data adaptation protocol (SDAP), packet data convergence protocol (PDCP), radio link control (RLC), medium access control (MAC), and physical (PHY) layers. Alternatively, the protocol stack does not have to include all of these protocols, but may include some of these protocols.

For example, the base station 100 is a gNB. The gNB is a node that provides NR user plane and control plane protocol terminations towards a UE and is connected to a 5G core network (5GC) via an NG interface. Alternatively, the base station 100 may be an en-gNB. The en-gNB is a node that provides NR user plane and control plane protocol terminations toward a UE and operates as a secondary node in E-UTRA-NR dual connectivity (EN-DC).

The base station 100 may include a plurality of nodes. The plurality of nodes may include a first node that hosts higher layers included in the protocol stack and a second node that hosts lower layers included in the protocol stack. The higher layers may include the RRC layer, the SDAP layer, and the PDCP layer, while the lower layers may include the RLC layer, the MAC layer, and the PHY layer. The first node may be a central unit (CU) and the second node may be a distributed unit (DU). Note that the plurality of nodes may include a third node that performs lower level processing of the PHY layer and the second node may perform higher level processing of the PHY layer. The third node may be a radio unit (RU).

Alternatively, the base station 100 may be one of the plurality of nodes and may be connected to another unit of the plurality of nodes.

The base station 100 may be an integrated access and backhaul (IAB) donor or an IAB node.

### (2) UE 200

The UE 200 communicates with a base station. For example, the UE 200 communicates with the base station 100 in a case where the UE 200 is located within the coverage area 10 of the base station 100.

For example, the UE 200 communicates with a base station (for example, base station 100) by using the protocol stack.

In particular, the UE 200 is mounted on a mobile body. For example, the mobile body may be an aircraft such as a UAV or a vehicle such as an autonomous driving car or a manual driving car with a navigation function. In the mobile body, a moving path may be set in advance. It is possible for the UE 200 to receive benefits of communication control based on the moving path by reporting the moving path to the network (that is, base station 100). A report of the moving path may be supported by, for example, a Flight Path mechanism or another moving path reporting mechanism.

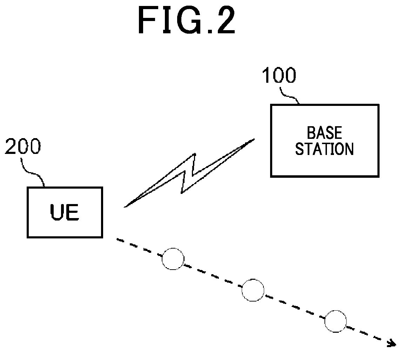

Referring to the example of FIG. 2, for example, the UE 200 reports the set moving path to the base station 100. The base station 100 preliminarily performs, for example, processing for a handover or beamforming based on a future position of the UE 200 that is estimated from the reported moving path. This allows communication control suitable for the estimated position to be performed at a timing at which the UE 200 reaches the position.

### <2. Configuration of Base Station>

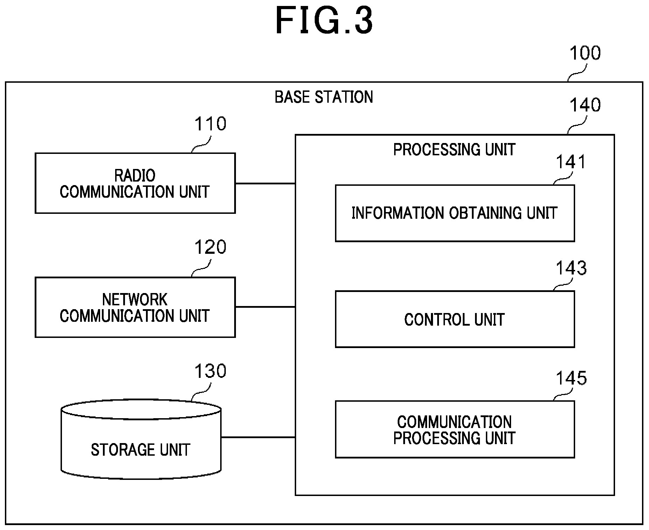

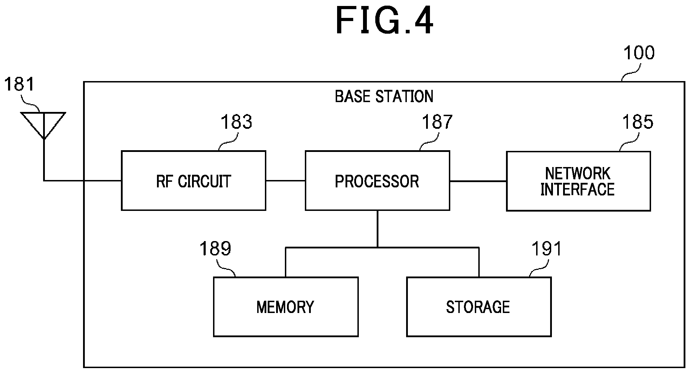

An example of a configuration of the base station 100 according to embodiments of the present disclosure will be described with reference to FIGS. 3 and 4.

### (1) Functional Configuration

First, an example of a functional configuration of the base station 100 according to embodiments of the present disclosure will be described with reference to FIG. 3. Referring to FIG. 3, the base station 100 includes a radio communication unit 110, a network communication unit 120, a storage unit 130, and a processing unit 140.

The radio communication unit 110 wirelessly transmits and receives signals. For example, the radio communication unit 110 receives a signal from a UE and transmits a signal to the UE.

The network communication unit 120 receives a signal from a network and transmits a signal to the network.

The storage unit 130 stores various kinds of information for the base station 100.

The processing unit 140 provides various functions of the base station 100. The processing unit 140 includes an information obtaining unit 141, a control unit 143, and a communication processing unit 145. Note that the processing unit 140 may further include another component in addition to these components. That is, the processing unit 140 may also perform an operation other than operations of these components. Specific operations of the information obtaining unit 141, the control unit 143, and the communication processing unit 145 will be described in detail below.

For example, the processing unit 140 (communication processing unit 145) communicates with a UE (for example, UE 200) via the radio communication unit 110. For example, the processing unit 140 (communication processing unit 145) communicates with another node (for example, a network node in the core network or another base station) via the network communication unit 120.

### (2) Hardware Configuration

Next, an example of a hardware configuration of the base station 100 according to embodiments of the present disclosure will be described with reference to FIG. 4. Referring to FIG. 4, the base station 100 includes an antenna 181, a radio frequency (RF) circuit 183, a network interface 185, a processor 187, a memory 189, and a storage 191.

The antenna 181 converts signals into radio waves and emits the radio waves into the air. In addition, the antenna 181 receives radio waves in the air and converts the radio waves into signals. The antenna 181 may include a transmitting antenna and a receiving antenna or may be a single antenna for transmission and reception. The antenna 181 may be a directional antenna and may include a plurality of antenna elements.

The RF circuit 183 performs analog processing on signals that are transmitted and received via the antenna 181. The RF circuit 183 may include a high-frequency filter, an amplifier, a modulator, a lowpass filter, and the like.

The network interface 185 is, for example, a network adaptor, and transmits a signal to a network and receives a signal from the network.

The processor 187 performs digital processing on signals that are transmitted and received via the antenna 181 and the RF circuit 183. The digital processing includes processing of the RAN protocol stack. The processor 187 also performs processing on signals that are transmitted and received via the network interface 185. The processor 187 may include a plurality of processors or may be a single processor. The plurality of processors may include a baseband processor that performs the digital processing and one or more processors that perform other processing.

The memory 189 stores a program to be executed by the processor 187, a parameter associated with the program, and other various kinds of information. The memory 189 may include at least one of a read only memory (ROM), an erasable programmable read only memory (EPROM), an electrically erasable programmable read only memory (EEPROM), a random access memory (RAM), and a flash memory. All or part of the memory 189 may be included in the processor 187.

The storage 191 stores various kinds of information. The storage 191 may include at least one of a solid state drive (SSD) and a hard disc drive (HDD).

The radio communication unit 110 may be implemented by the antenna 181 and the RF circuit 183. The network communication unit 120 may be implemented by the network interface 185. The storage unit 130 may be implemented by the storage 191. The processing unit 140 may be implemented by the processor 187 and the memory 189.

Part or the whole of the processing unit 140 may be virtualized. In other words, part or all of the processing unit 140 may be implemented as a virtual machine. In this case, part or all of the processing unit 140 may operate as a virtual machine on a physical machine (that is, hardware) including a processor, a memory, and the like and a hypervisor.

Given the hardware configuration described above, the base station 100 may include a memory (that is, memory 189) that stores a program and one or more processors (that is, processor 187) capable of executing the program and the one or more processors may perform operations of the processing unit 140 by executing the program. The program may be a program for causing the processors to execute the operations of the processing unit 140.

### <3. Configuration of User Equipment>

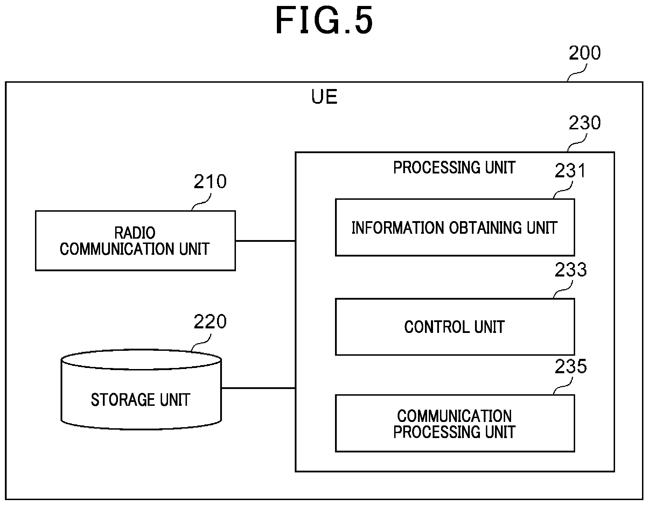

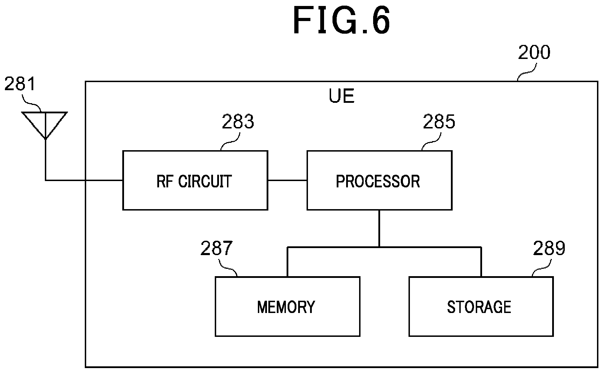

An example of a configuration of the UE 200 according to embodiments of the present disclosure will be described with reference to FIGS. 5 and 6.

### (1) Functional Configuration

First, an example of a functional configuration of the UE 200 according to embodiments of the present disclosure will be described with reference to FIG. 5. Referring to FIG. 5, the UE 200 includes a radio communication unit 210, a storage unit 220, and a processing unit 230.

The radio communication unit 210 wirelessly transmits and receives signals. For example, the radio communication unit 210 receives a signal from a base station and transmits a signal to the base station. For example, the radio communication unit 210 receives a signal from another UE and transmits a signal to the other UE.

The storage unit 220 stores various kinds of information for the UE 200.

The processing unit 230 provides various functions of the UE 200. The processing unit 230 includes an information obtaining unit 231, a control unit 233, and a communication processing unit 235. Note that the processing unit 230 may further include another component in addition to these components. That is, the processing unit 230 may also perform an operation other than operations of these components. Specific operations of the information obtaining unit 231, the control unit 233, and the communication processing unit 235 will be described in detail below.

For example, the processing unit 230 (communication processing unit 235) communicates with a base station (for example, the base station 100) or another UE via the radio communication unit 210.

### (2) Hardware Configuration

Next, an example of a hardware configuration of the UE 200 according to embodiments of the present disclosure will be described with reference to FIG. 6. Referring to FIG. 6, the UE 200 includes an antenna 281, an RF circuit 283, a processor 285, a memory 287, and a storage 289.

The antenna 281 converts signals into radio waves and emits the radio waves into the air. In addition, the antenna 281 receives radio waves in the air and converts the radio waves into signals. The antenna 281 may include a transmitting antenna and a receiving antenna or may be a single antenna for transmission and reception. The antenna 281 may be a directional antenna and may include a plurality of antenna elements.

The RF circuit 283 performs analog processing on signals that are transmitted and received via the antenna 281. The RF circuit 283 may include a high-frequency filter, an amplifier, a modulator, a lowpass filter, and the like.

The processor 285 performs digital processing on signals that are transmitted and received via the antenna 281 and the RF circuit 283. The digital processing includes processing of the RAN protocol stack. The processor 285 may include a plurality of processors or may be a single processor. The plurality of processors may include a baseband processor that performs the digital processing and one or more processors that perform other processing.

The memory 287 stores a program to be executed by the processor 285, a parameter associated with the program, and other various kinds of information. The memory 287 may include at least one of a ROM, an EPROM, an EEPROM, a RAM, and a flash memory. All or part of the memory 287 may be included in the processor 285.

The storage 289 stores various kinds of information. The storage 289 may include at least one of an SSD and an HDD.

The radio communication unit 210 may be implemented by the antenna 281 and the RF circuit 283. The storage unit 220 may be implemented by the storage 289. The processing unit 230 may be implemented by the processor 285 and the memory 287.

The processing unit 230 may be implemented by a system on a chip (SoC) including the processor 285 and the memory 287. The SoC may include the RF circuit 283 and the radio communication unit 210 may also be implemented by the SoC.

Given the hardware configuration described above, the UE 200 may include a memory (that is, memory 287) that stores a program and one or more processors (that is, processor 285) capable of executing the program and the one or more processors may perform operations of the processing unit 230 by executing the program. The program may be a program for causing the processors to execute the operations of the processing unit 230.

### <4. Operation Examples>

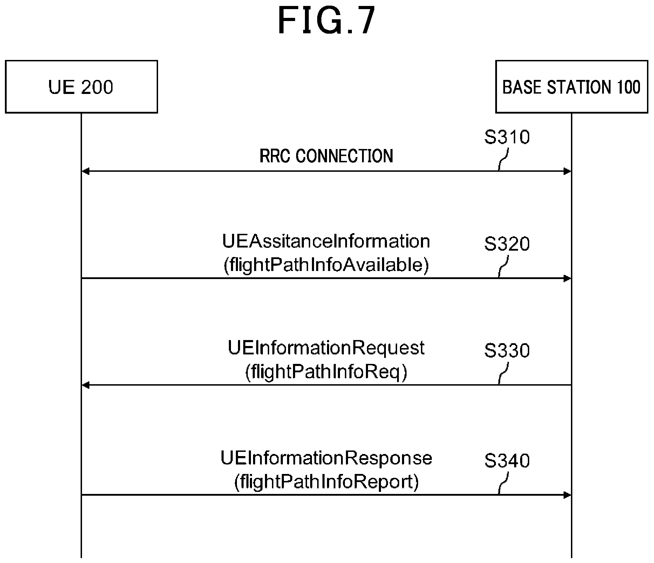

Examples of operations of the base station 100 and the UE 200 according to embodiments of the present disclosure will be described with reference to FIG. 7.

### (1) Operation of UE 200

The UE 200 transmits path related information to the base station 100 at the initiation of the UE 200 itself. After that, the UE 200 receives path request information from the base station 100. The UE 200 transmits path information to the base station 100. The following describes an operation of the UE 200 and relevant information in detail.

### (1-1) Transmission of Path Related Information at Initiation of UE

The UE 200 transmits an RRC message including path related information associated with a moving path of the UE 200 to the base station 100 at the initiation of the UE 200. Specifically, the UE 200 (information obtaining unit 231) obtains the path related information. The UE 200 (communication processing unit 235) transmits an RRC message including the path related information to the base station 100. For example, the UE 200 transmits the RRC message including the path related information to the base station 100 in a case where path information is available. Note that the availability of the path information may mean that the path information is set.

The path related information includes information indicating the availability of the path information that indicates at least the moving path. For example, the information indicating the availability of the path information may be flightPathInfoAvailable defined in the TSs in 3GPP Release 15 or information corresponding to this. Note that the information indicating the availability of the path information may also be regarded as information indicating the presence or absence of the path information. This makes it possible to use the mechanism that has been already defined in the TSs.

In addition, the RRC message including the path related information is an RRC message that is transmittable at the initiation of the UE 200. For example, the RRC message is an RRC message that is transmitted after an RRC connection is established.

Here, in the Flight Path mechanism defined in Release 15, a UE transmits an RRC message including flightPathInfoAvailable at the time of the establishment of an RRC connection or at the time of Reconfiguration. Specifically, the UE transmits, to a base station, an RRC message that is an RRC message (for example, RRCSetupComp, RRCReestablishmentComp, RRCResumeComp, or RRCReconfigurationComp) serving as a response to an RRC message from the base station and includes flightPathInfoAvailable. It is not thus possible for the UE to transmit flightPathInfoAvailable at a timing other than the timing described above. In contrast, an RRC message including the path related information according to embodiments of the present disclosure is transmittable at any timing at the initiation of the UE 200 after an RRC connection is established.

More specifically, the RRC message is an existing RRC message that is transmittable at the initiation of a UE. For example, the RRC message may be a UEAssistanceInformation message. This makes it possible to transmit the path related information to the base station 100 at any timing without additionally defining a new RRC message.

Note that, in a case where the path information is available at the time of the establishment of an RRC connection or at the time of Reconfiguration, the UE 200 may transmit the path related information by using an RRC message (for example, RRCSetupComp, RRCReestablishmentComp, RRCResumeComp, or RRCReconfigurationComp) used in the Flight Path mechanism defined in Release 15.

### (1-2) Reception of Path Request Information

The UE 200 receives path request information from the base station 100. Specifically, the UE 200 (communication processing unit 235) receives, from the base station 100, an RRC message including the path request information indicating a request of path information.

More specifically, the RRC message including the path request information is an RRC message that requests a response. For example, the RRC message may be a UEInformationRequest message. In addition, the path request information may be flightPathInfoReq defined in Release 15 or information corresponding to this. This makes it possible to use the mechanism that has been already defined in the TSs.

### (1-3) Transmission of Path Information

The UE 200 transmits path information to the base station 100. Specifically, the UE 200 (communication processing unit 235) transmits, to the base station 100, an RRC message including path information that indicates at least a moving path of the UE 200.

More specifically, the RRC message including the path information is an RRC message that is a response to an RRC message including path request information. For example, the RRC message for the response may be a UEInformationResponse message. In addition, the path information may be flightPathInfoReport defined in Release 15 or information corresponding to this. This makes it possible to use the mechanism that has been already defined in the TSs.

### (2) Operation of Base Station 100

The base station 100 receives path related information that is spontaneously transmitted from the UE 200. The base station 100 transmits path request information to the UE 200 based on the path related information. After that, the base station 100 receives path information from the UE 200. The following describes an operation of the base station 100 and relevant information in detail. Note that the contents which are substantially the same as the description of an operation of the UE 200 will not be described in detail.

### (2-1) Reception of Path Related Information

The base station 100 receives path related information from the UE 200. Specifically, the base station 100 (communication processing unit 145) receives an RRC message including the path related information from the UE 200. The base station 100 (information obtaining unit 141) obtains the path related information included in the received RRC message. Note that the path related information is optional and is not thus always included in the RRC message.

For example, the RRC message may be a UEAssistanceInformation message.

Note that the base station 100 may receive the path related information by using an RRC message used in the Flight Path mechanism defined in Release 15 as with the conventional technology.

### (2-2) Transmission of Path Request Information

The base station 100 transmits path request information to the UE 200. Specifically, the base station 100 (information obtaining unit 141) obtains the path request information for the UE 200 that is the transmission source of path related information. The base station 100 (communication processing unit 145) transmits an RRC message including the path request information to the UE 200.

More specifically, the RRC message including the path request information may be a UEInformationRequest message. In addition, the path request information may be flightPathInfoReq defined in Release 15 or information corresponding to this.

### (2-3) Reception of Path Information

The base station 100 receives path information from the UE 200. Specifically, the base station 100 (communication processing unit 145) receives an RRC message including the path information from the UE 200. The base station 100 (information obtaining unit 141) obtains the path information included in the received RRC message.

More specifically, the RRC message including the path information may be a UEInformationResponse message. In addition, the path information may be flightPathInfoReport defined in Release 15 or information corresponding to this.

The base station 100 performs communication control on the UE 200 based on the received path information. In this way, a report of the path information at the initiation of the UE 200 makes it possible to make the application of movement information to the communication control earlier.

### (3) Flow of Processing

An example of processing according to embodiments of the present disclosure will be described with reference to FIG. 7. FIG. 7 illustrates a case where path information is available after an RRC connection is established.

The base station 100 and the UE 200 establish an RRC connection (S310). For example, a procedure such as RRC Setup, RRC Reestablishment, or RRC Resume is performed between the base station 100 and the UE 200 to establish an RRC connection. Note that, in a case where path information is available at this time point, path related information may be transmitted to the base station 100 by using an RRC message (for example, RRCSetupComp, RRCReestablishmentComp, or RRCResumeComp) in each procedure.

The UE 200 transmits a UEAssistanceInformation message to the base station 100 (S320). For example, when the path information is available after an RRC connection is established, the UE 200 transmits, to the base station 100, a UEAssistanceInformation message including information such as flightPathInfoAvailable indicating the availability of the path information.

The base station 100 transmits a UEInformationRequest message to the UE 200 (S330). For example, in a case where the received UEAssistanceInformation message includes the information indicating the availability of the path information, the base station 100 transmits, to the UE 200, a UEInformationRequest message including path request information such as flightPathInfoReq.

The UE 200 transmits a UEInformationResponse message to the base station 100 (S340). For example, in a case where the received UEInformationRequest message includes the path request information, the base station 100 transmits, to the base station 100, a UEInformationResponse message including the path information such as flightPathInfoReport.

In this way, according to embodiments of the present disclosure, an RRC message that is an RRC message including path related information associated with a moving path of the UE 200 and is initiated by the UE 200 is transmitted to the base station 100. This decreases a time necessary to transmit path information about the UE 200 to the base station 100 after the path information is available as compared with the mechanism in Release 15 that allows a UE to transmit movement information only as a response to an RRC message from a base station. This makes it possible to reduce a time lag from the time when a moving path can be reported by the UE to the time when communication control based on the moving path enables. In other words, it is possible for the UE 200 to report the path information to the base station 100 at any timing. This allows the UE 200 to receive benefits based on the path information earlier than the conventional technology by reporting the path information to the base station 100 as soon as the path information is available.

### <5. Modification Examples>

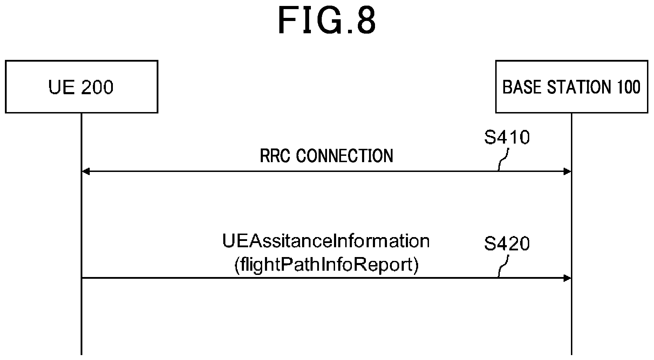

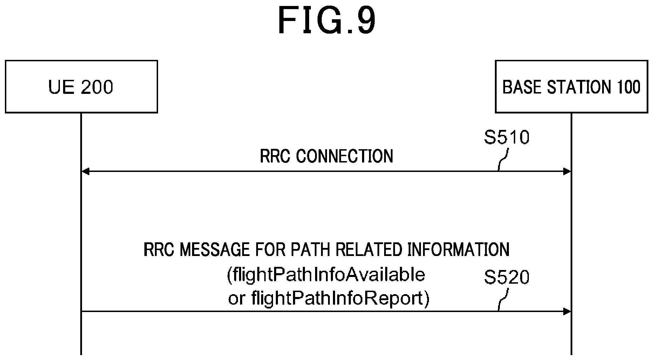

First to third modification examples according to embodiments of the present disclosure will be described with reference to FIGS. 8 and 9. Note that two or more of these modification examples may be combined.

### (1) First Modification Example: Path Related Information is Path Information

In the embodiments of the present disclosure described above, the path related information is information indicating the availability of the path information. However, the path related information according to embodiments of the present disclosure is not limited to this example.

As the first modification example of embodiments of the present disclosure, the path related information may include path information that indicates at least a moving path of the UE 200.

Specifically, the UE 200 transmits, to the base station 100, an RRC message including the path information at the initiation of the UE 200 instead of information indicating the availability of the path information.

An example of processing according to the first modification example of embodiments of the present disclosure will be described with reference to FIG. 8. FIG. 8 illustrates a case where path information is available after an RRC connection is established. Note that processing which is substantially the same as that of FIG. 7 will not be described.

The base station 100 and the UE 200 establish an RRC connection (S410). Note that, in a case where path information is available at this time point, path information may be transmitted to the base station 100 by using an RRC message (for example, RRCSetupComp, RRCReestablishmentComp, or RRCResumeComp) in each procedure.

The UE 200 transmits a UEAssistanceInformation message to the base station 100 (S420). For example, when the path information is available after an RRC connection is established, the UE 200 transmits, to the base station 100, a UEAssistanceInformation message including the path information such as flightPathInfoReport.

In this way, according to the first modification example of embodiments of the present disclosure, the UE 200 transmits, to the base station 100, an RRC message including the path information at the initiation of the UE 200 instead of information indicating the availability of the path information. This reduces signaling as compared with the mechanism in Release 15 and thus makes it possible to reduce the consumption of power and the consumption of radio resources.

### (2) Second Modification Example: Transmission of Path Related Information in Dedicated Message

In the embodiments of the present disclosure described above, the path related information is transmitted by using an existing RRC message. An RRC message for transmitting the path related information according to embodiments of the present disclosure is not, however, limited to this example.

As the second modification example of embodiments of the present disclosure, the RRC message including the path related information may be an RRC message defined for the path related information.

Specifically, the RRC message including the path related information may be an RRC message dedicated to the transmission and reception of the path related information. For example, a dedicated RRC message is defined for the information indicating the availability of the path information. Note that respective dedicated RRC messages may also be defined for the path request information and the path information that are subsequently transmitted and received.

Note that, in a case where the path information is transmitted instead of the information indicating the availability of the path information as in the first modification example, a dedicated RRC message may be defined for the path information. In addition, the RRC message for the information indicating the availability of the path information and the RRC message for the path information may be the same.

For example, the RRC message including the path related information may be a message such as Proximity Indication for a closed subscriber group (CSG). For example, when the UE 200 detects that the path information is set, the UE 200 transmits, to the base station 100, a dedicated RRC message including the path information or the information indicating the availability of the path information.

An example of processing according to the first modification example of embodiments of the present disclosure will be described with reference to FIG. 9. FIG. 9 illustrates a case where path information is available after an RRC connection is established. Note that processing which is substantially the same as that of FIG. 7 will not be described.

The base station 100 and the UE 200 establish an RRC connection (S510).

The UE 200 transmits an RRC message dedicated to path related information to the base station 100 (S520). For example, when the path information is available after an RRC connection is established, the UE 200 transmits, to the base station 100, a dedicated RRC message including information such as flightPathInfoAvailable indicating the availability or path information such as flightPathInfoReport. Note that, in a case where the dedicated RRC message includes the information indicating the availability of the path information, an RRC message including the path request information such as flightPathInfoReq is transmitted to the UE 200 and an RRC message including the path information such as flightPathInfoReport is transmitted to the base station 100 after the dedicated RRC message is transmitted.

In this way, according to the second modification example of embodiments of the present disclosure, the RRC message including the path related information is an RRC message defined for the path related information. This makes it possible to communicate the path related information without modifying an existing RRC message.

### (3) Third Modification Example: Compliance with Other TSs

In the example described in embodiments of the present disclosure, the system 1 is a system compliant with the TSs of 5G or NR. However, the system 1 according to embodiments of the present disclosure is not limited to this example.

In the third modification example of embodiments of the present disclosure, the system 1 may be a system compliant with other TSs in 3GPP. As an example, the system 1 may be a system compliant with the TSs of LTE, LTE-A, or 4G and the base station 100 may be an evolved node B (eNB). Alternatively, the base station 100 may be an ng-eNB. As another example, the system 1 may be a system compliant with the TSs of 3G and the base station 100 may be a Node B. As yet another example, the system 1 may be a system compliant with next generation (for example, 6G) TSs.

Alternatively, the system 1 may be a system compliant with TSs of another standards organization for mobile communications.

While embodiments of the present disclosure have been described above, the present disclosure is not limited to the embodiments. It will be understood by those skilled in the art that the embodiments are merely examples and various changes can be made without departing from the scope and the spirit of the present disclosure.

For example, steps in processing described in the present specification do not necessarily have to be executed chronologically in the order described in the flowchart or the sequence diagram. For example, steps in processing may be executed in an order different from the order described as the flowchart or the sequence diagram or may be executed in parallel. In addition, some of steps in processing may be removed or a further step may be added to the processing.

For example, there may be provided a method including the operations of one or more components of the apparatus described in the present specification or there may be provided a program for causing a computer to execute the operations of the components. Moreover, there may be provided a non-transitory tangible computer-readable storage medium having stored therein the program. Naturally, such a method, program, and non-transitory tangible computer-readable storage medium are also included in the present disclosure.

For example, in the present disclosure, a user equipment (UE) may be referred to by another name such as mobile station, mobile terminal, mobile apparatus, mobile unit, subscriber station, subscriber terminal, subscriber apparatus, subscriber unit, wireless station, wireless terminal, wireless apparatus, wireless unit, remote station, remote terminal, remote apparatus, or remote unit.

For example, in the present disclosure, "transmit" may mean performing processing of at least one layer in a protocol stack used for transmission or physically transmitting a signal wirelessly or by wire. Alternatively, "transmit" may mean a combination of performing the processing of the at least one layer and physically transmitting a signal wirelessly or by wire. Similarly, "receive" may mean performing processing of at least one layer in a protocol stack used for reception or physically receiving a signal wirelessly or by wire. Alternatively, "receive" may mean a combination of performing the processing of the at least one layer and physically receiving a signal wirelessly or by wire. The at least one layer may be replaced with at least one protocol.

For example, in the present disclosure, "obtain/acquire" may mean obtaining/acquiring information from stored information, obtaining/acquiring information from information received from another node, or obtaining/acquiring information by generating the information.

For example, in the present disclosure, "include" and "comprise" do not mean that listed items alone are included, but mean that listed items alone may be included or a further item may be included in addition to the listed items.

For example, in the present disclosure, "or" does not mean exclusive OR, but means inclusive OR.

Note that the technical features included in the embodiments may be represented as the following features. Naturally, the present disclosure is not limited to the following features.

### (Feature 1)

A user equipment (200) comprising:
an information obtaining unit (231) configured to obtain path related information associated with a moving path of the user equipment; and
a communication processing unit (235) configured to transmit a radio resource control (RRC) message including the path related information to a base station (100), wherein
the RRC message including the path related information is an RRC message initiated by the user equipment.

### (Feature 2)

The user equipment according to Feature 1, wherein
the path related information includes information indicating availability of path information that indicates at least the moving path.

### (Feature 3)

The user equipment according to Feature 2, wherein
the communication processing unit is configured to receive, from the base station, another RRC message including path request information indicating a request of the path information and transmit, to the base station, a response RRC message that is an RRC message serving as a response to the other RRC message and includes the path information.

### (Feature 4)

The user equipment according to Feature 1, wherein
the path related information includes path information that indicates at least the moving path.

### (Feature 5)

The user equipment according to any one of Features 1 to 4, wherein
the RRC message including the path related information is transmitted after an RRC connection is established.

### (Feature 6)

The user equipment according to Feature 5, wherein
the RRC message including the path related information is a UEAssistanceInformation message.

### (Feature 7)

The user equipment according to Feature 5, wherein
the RRC message including the path related information is an RRC message defined for the path related information.

### (Feature 8)

A base station (100) comprising:
a communication processing unit configured to receive a radio resource control (RRC) message including path related information associated with a moving path of a user equipment (200) from the user equipment; and
an information obtaining unit configured to obtain the path related information included in the RRC message including the path related information, wherein
the RRC message including the path related information is an RRC message initiated by the user equipment.

### (Feature 9)

A method performed by a user equipment (200), comprising:
obtaining path related information associated with a moving path of the user equipment; and
transmitting a radio resource control (RRC) message including the path related information to a base station (100), wherein
the RRC message including the path related information is an RRC message initiated by the user equipment.

### (Feature 10)

A method performed by a base station (100), comprising:
receiving a radio resource control (RRC) message including path related information associated with a moving path of a user equipment (200) from the user equipment; and
obtaining the path related information included in the RRC message including the path related information, wherein
the RRC message including the path related information is an RRC message initiated by the user equipment.

### (Feature 11)

A program for causing a computer to execute operations of:
obtaining path related information associated with a moving path of a user equipment (200); and
transmitting a radio resource control (RRC) message including the path related information to a base station (100), wherein
the RRC message including the path related information is an RRC message initiated by the user equipment.

### (Feature 12)

A program for causing a computer to execute operations of:
receiving a radio resource control (RRC) message including path related information associated with a moving path of a user equipment (200) from the user equipment; and
obtaining the path related information included in the RRC message including the path related information, wherein
the RRC message including the path related information is an RRC message initiated by the user equipment.

### (Feature 13)

A non-transitory tangible computer-readable storage medium having stored therein a program for causing a computer to execute operations of:
obtaining path related information associated with a moving path of a user equipment (200); and
transmitting a radio resource control (RRC) message including the path related information to a base station (100), wherein
the RRC message including the path related information is an RRC message initiated by the user equipment.

### (Feature 14)

A non-transitory tangible computer-readable storage medium having stored therein a program for causing a computer to execute operations of:
receiving a radio resource control (RRC) message including path related information associated with a moving path of a user equipment (200) from the user equipment; and
obtaining the path related information included in the RRC message including the path related information, wherein
the RRC message including the path related information is an RRC message initiated by the user equipment.

## Claims

1. An apparatus (200) comprising:
an information obtaining unit (231) configured to obtain path related information associated with a moving path of the apparatus; and
a communication processing unit (235) configured to transmit a radio resource control, RRC, message including the path related information to a base station (100), wherein
the RRC message including the path related information is an RRC message initiated by the apparatus.

2. The apparatus according to claim 1, wherein
the path related information includes information indicating availability of path information that indicates at least the moving path.

3. The apparatus according to claim 2, wherein
the communication processing unit is configured to receive, from the base station, another RRC message including path request information indicating a request of the path information and transmit, to the base station, a response RRC message that is an RRC message serving as a response to the other RRC message and includes the path information.

4. The apparatus according to claim 1, wherein
the path related information includes path information that indicates at least the moving path.

5. The apparatus according to any one of claims 1 to 4, wherein
the RRC message including the path related information is transmitted after an RRC connection is established.

6. The apparatus according to claim 5, wherein
the RRC message including the path related information is a UEAssistanceInformation message.

7. The apparatus according to claim 5, wherein
the RRC message including the path related information is an RRC message defined for the path related information.

8. An apparatus (100) comprising:
a communication processing unit configured to receive a radio resource control, RRC, message including path related information associated with a moving path of a user equipment (200) from the user equipment; and
an information obtaining unit configured to obtain the path related information included in the RRC message including the path related information, wherein
the RRC message including the path related information is an RRC message initiated by the user equipment.

9. A method performed by an apparatus (200), comprising:
obtaining path related information associated with a moving path of the apparatus; and
transmitting a radio resource control, RRC, message including the path related information to a base station (100), wherein
the RRC message including the path related information is an RRC message initiated by the apparatus.

10. A method performed by an apparatus (100), comprising:
receiving a radio resource control, RRC, message including path related information associated with a moving path of a user equipment (200) from the user equipment; and
obtaining the path related information included in the RRC message including the path related information, wherein
the RRC message including the path related information is an RRC message initiated by the user equipment.
